# DEMANDE DE BREVET EUROPEEN

(11) **EP 0 639 839 A1**
(43) Date de publication de la demande: **22.02.1995**
(21) Numéro de dépôt: 94470025.1
(22) Date de dépôt: 18.08.1994
(51) Int. Cl.: H01F 13/00, G01N 27/82

(54) **Dispositif de magnétisation ou démagnétisation d'un produit metallique**

(30) Priorité: 20.08.1993 FR 9310256
(71) Demandeur: INNOVATIONS RAYONS X ET TECHNIQUES RESSUAGE MAGNETOSCOPIE IXTREM, F-71100 Chalon sur Saone (FR)
(72) Inventeur: Crescenzo, Eric, F-57000 Metz (FR)
(74) Mandataire: Schmit, Christian Norbert Marie

(57) **Abrégé**

Le dispositif de magnétisation ou démagnétisation d'un produit métallique (1) en déplacement relatif selon une direction axiale (2) comporte:
- au moins un ensemble (3) de sources magnétisantes (4) réparties selon la direction axiale au voisinage d'une zone de passage (6) du produit, chaque source magnétisante (4) comprenant au moins un conducteur électrique alimenté en courant continu, et agencé de manière à générer dans la zone de passage un champ magnétique (B) d'intensité et de sens constant prédéterminés, deux sources magnétisantes successives d'un même ensemble étant agencés de manière que les champs respectifs générés par ces sources magnétisantes soient d'orientation, de sens et/ou d'intensité différentes,
- et des moyens de déplacement pour déplacer en continu le dit produit par rapport aux sources magnétisantes selon la dite direction axiale,

le nombre de ces sources magnétisantes, et leur répartition selon la direction axiale, étant tel que lors du défilement du produit, un point quelconque de la surface du produit est soumis à un champ de direction, d'intensité et/ou de sens variable.

Application notamment à la démagnétisation d'un objet ou produit sidérurgique, ou à la magnétisation requise lors de contrôles magnétoscopiques.

## Description

La présente invention concerne un dispositif de magnétisation (ou aimantation) ou de démagnétisation (ou désaimantation) d'un produit ou objet métallique magnétisable, déplacé relativement par rapport au dispositif selon une direction axiale.

De tels dispositifs sont notamment destinés à démagnétiser des objets ou produits devant être ultérieurement soumis à des contrôles non destructifs ou encore à magnétiser localement et pluridirectionnellement de tels produits.

On connaît notamment des dispositifs destinés à désaimanter ou démagnétiser des objets tels que des étiquettes magnétiques antivol. Un tel dispositif est décrit dans le document EP-A-0257 767. Ce dispositif comprend un ensemble de plusieurs aimants successivement disposés avec leurs polarités alternativement opposées, pour créer une succession de champs magnétiques de sens inversés et d'intensité progressivement décroissante pour au moins une portion de l'ensemble, de sorte que, lorsqu'une étiquette magnétique portant une information est déplacée devant cet ensemble, elle est soumise successivement à des champs de sens opposés et d'intensité décroissante ce qui conduit à sa démagnétisation.

Un tel système vise à démagnétiser un objet de faible dimension, et surtout, en juxtaposant les aimants permanents avec un pas très faible (moins de 4 mm), à ce que la résultante des différents champs soit pratiquement nulle dès que l'on s'éloigne un tant soit peu du dispositif, ceci pour éviter d'influencer l'objet (tel qu'une cassette audio ou vidéo à bande magnétique) sur lequel l'étiquette est apposée.

On comprendra aisément qu'un tel système utilisant de petits aimants permanents ne peut convenir dès lors que les champs de démagnétisation requis doivent avoir une forte intensité. Même en utilisant des aimants permanents de plus forte puissance et plus espacés, il n'est pas possible avec un tel ensemble de générer, dans un produit à démagnétiser de grandes dimensions tel qu'un produit sidérurgique (brame ou billette en acier), des champs multidirectionnels requis dans des applications de ce type.

De plus, des aimants permanents ne peuvent générer que des champs constants en intensité, et on ne peut donc pas régler facilement l'intensité d'aimantation une fois la configuration fixée. De plus encore, un ensemble d'aimants permanents juxtaposés ne pourra créer en un point d'un objet déplacé devant cet ensemble que des champs à fréquence fixe prédéterminés, sauf à modifier la vitesse de déplacement, ce qui ne peut être toujours acceptable dans des applications industrielles de démagnétisation de grandes pièces, alors que pour de telles applications, il peut être justement nécessaire de modifier cette fréquence en fonction des dites pièces.

Enfin, un système à aimants permanents de ce type crée essentiellement en surface de l'objet des champs normaux à cette surface, ce qui exclut l'utilisation d'un tel système pour une application de magnétisation telle qu'en magnétoscopie où il est requis de générer essentiellement des champs tangentiels (sensiblement parallèles à la surface). Par ailleurs, des systèmes à aimants permanents génèrent des champs de manière permanente. Il en résulte que l'utilisation de tels aimants pose des problèmes pour des utilisations en milieux industriels où les aimants peuvent rapidement être encrassés par dépôt de poussières ou particules ferromagnétiques attirées par ceux-ci, et le nettoyage est difficile du fait que le champ ne peut être supprimé.

Dans des applications de magnétisation, on connaît en particulier le contrôle magnétoscopique de produits en matériaux ferromagnétiques, par exemple en acier, qui consiste, en vue de détecter des défauts de surface tels que des criques, à répandre sur la surface du produit à contrôler une encre magnétique (liquide contenant des particules de matériau ferromagnétique) servant de révélateur de défauts, à soumettre le produit à une succession de champs magnétiques tangentiels à la surface et d'orientation variable et à observer ensuite la répartition de ces particules. En présence d'une fissure, les dits champs créent aux bords de la fissure des dipôles magnétiques agissant comme une multitude de petits aimants qui créent une répartition particulière des particules de l'encre magnétique, cette répartition restant visible même après que le produit soit sorti de l'influence des champs magnétiques générateurs. Dans une telle application, il est nécessaire que la surface du produit soit en quelque sorte balayée par des champs orientés selon diverses directions pour que les dits dipôles aient eux mêmes différentes directions, faute de quoi certains défauts risqueraient de ne pas être révélés (par exemple des fissures longitudinales orientées dans la direction d'un champ tangentiel de direction fixe).

Actuellement, dans le domaine du contrôle magnétoscopique, les principaux moyens pour générer un champ magnétique alternatif sinusoïdal ou redressé une ou deux alternances, est d'utiliser des sources magnétisantes alimentées par des courants de forme alternative telles que des bobines ou électro-aimants alimentés directement par le secteur ou par un générateur de courant basse tension, haute intensité de type monophasé, directement branché sur le secteur de distribution électrique 220V ou 380V, ou encore il est également possible de faire passer du courant électrique basse tension, haute intensité directement dans les pièces à contrôler.

Cette façon de faire présente plusieurs inconvénients :
- difficultés de magnétiser des objets en mouvement,
- déséquilibre du secteur d'alimentation avec, dans le cas d'utilisation de thyristors de puissance pour régler l'intensité du courant, génération d'harmoniques liés à l'utilisation de ces thyristors,
- difficulté et coût élevé de fabrication des générateurs de courant basse tension, haute intensité capable de travailler à basse fréquence ou très haute fréquence ; c'est la raison pour laquelle généralement les équipements utilisés travaillent à 50 Hz.
- difficulté de magnétiser toutes les faces de l'objet à contrôler en une seule fois et selon deux directions perpendiculaires afin de déceler les défauts dans toutes les directions, d'où l'intérêt des champs magnétiques tournants ou oscillants.

Bien entendu, il est possible de générer des champs tournants et oscillants avec les moyens traditionnels en utilisant une alimentation secteur 220V ou 380V. Toutefois, la consommation d'énergie est telle que le procédé est difficilement utilisable industriellement.

Le problème de consommation d'énergie se pose également pour le contrôle magnétoscopique des pièces massives avec un champ magnétique alternatif.

La présente intervention a pour but de résoudre les problèmes indiqués ci-dessus et vise notamment à proposer un dispositif de magnétisation ou démagnétisation offrant une grande souplesse d'utilisation, permettant de démagnétiser efficacement des produits ou objets de grande dimension ainsi que de créer la magnétisation requise lors de certaines opérations de contrôle non destructif, telles que notamment les contrôles par magnétoscopie.

Avec ces objectifs en vue, l'invention a pour objet un dispositif de magnétisation ou démagnétisation d'un produit métallique en déplacement relatif par rapport au dispositif selon une direction axiale, caractérisé en ce qu'il comporte :
- au moins un ensemble de sources magnétisantes réparties selon la dite direction axiale au voisinage d'une zone de passage du produit, chaque source magnétisante comprenant au moins un conducteur électrique alimenté par un courant continu ou sensiblement continu, et agencé de manière à générer dans la dite zone de passage un champ magnétique d'intensité et de sens constant prédéterminés, deux sources magnétisantes successives d'un même ensemble étant agencées de manière que les champs respectifs générés par les dites sources magnétisantes soient d'orientation, de sens et/ou d'intensité différents, et
- des moyens de déplacement pour déplacer en continu le dit produit par rapport aux sources magnétisantes selon la dite direction axiale,

le nombre de ces sources magnétisantes, et leur répartition selon la direction axiale, étant tel que lors du défilement du produit, un point quelconque de la surface du produit est soumis à un champ de direction, d'intensité et/ou de sens variable.

Comme on le comprendra mieux par la suite, l'utilisation de conducteurs électriques alimentés en courant continu ou sensiblement continu, offre une grande souplesse pour la réalisation et la mise en oeuvre d'un dispositif de magnétisation ou démagnétisation, notamment par la diversité des agencements possibles de ces conducteurs pour créer les champs requis dans les objets ou produits traités, que ce soit en terme d'intensité de ce champ, de direction, de sens, de fréquence du champ vu en un point quelconque du produit.

En particulier, une fois le type de source magnétisante défini (conducteur électrique agencé sous forme de bobinages ou de nappes, conducteur bobiné autour d'un noyau pour former un électroaimant, etc...), de manière à générer dans la zone de passage. (et donc dans le produit déplacé dans cette zone) un champ de direction prédéterminée, il reste possible de régler facilement de nombreux paramètres pour adapter le dispositif à l'application particulière visée, par exemple :
- réglage de l'intensité du champ vu par le produit, par un simple réglage de l'intensité du courant d'alimentation des conducteurs ou par un réglage de la distance des sources magnétisantes par rapport au produit, perpendiculairement à la dite direction axiale, simultanément ou séparément pour les différentes sources magnétisantes, ou pour les différents ensembles,
- réglage de la fréquence du champ vu par un point de l'objet, en réglant soit la vitesse des moyens d'entraînement, soit l'écartement des sources ou des ensembles des sources,
- création dans le produit de champs tournants ou oscillants, soit par un décalage angulaire adapté des sources d'un même ensemble, ou par imbrication entre eux de différents ensembles constitués de différentes formes de sources : par exemple, un ensemble de sources formées de bobinages encerclant la zone de passage pour créer dans le produit des champs dirigés sensiblement parallèlement à la dite direction axiale, imbriqué avec un ou plusieurs ensembles de sources formées d'électroaimants d'axes perpendiculaires à la dite direction axiale, pour créer dans le produit des champs tangents orientés également perpendiculairement à la direction de déplacement, etc...

D'autres caractéristiques et avantages apparaîtront dans la description qui va être faite de diverses variantes de réalisation du dispositif selon l'invention.

On se reportera aux dessins annexés dans lesquels :
- les figures 1 à 3 illustrent le principe général mis en oeuvre par le dispositif selon l'invention pour générer dans un produit, en déplacement par rapport au dispositif, des champs magnétiques variables périodiquement, de différents types ; les figures 1a, 2a, 3a montrant respectivement les formes du champ vu par un point du produit lors de ce déplacement,
- les figures 4 et 5 illustrent schématiquement la possibilité de créer, par le dispositif selon l'invention, des champs de différents sens et dans deux directions perpendiculaires,
- la figure 6 représente l'imbrication de deux ensembles de sources magnétisantes générant les champs montrés respectivement sur les fig.4 et 5, pour générer dans le produit un champ tournant,
- la figure 7 est une vue en perspective d'un dispositif correspondant, utilisant comme sources magnétisantes des bobines et électroaimants,
- fig.8 à 10 correspondent aux fig.4 et 5, dans le cas de champs créés dans trois directions orthogonales,
- la fig.11 représente les champs créés par l'imbrication de trois ensembles générant chacun des champs selon respectivement les figures 8 à 10, pour créer des champs tournants multidirectionnels,
- la fig.12 illustre de manière similaire comment générer dans le produit des champs oscillants,
- la fig.13 est une vue frontale d'une source magnétisante utilisable dans un dispositif conforme à l'invention pour créer dans l'objet en déplacement un champ tournant dans un plan perpendiculaire à la direction axiale de déplacement,
- la fig.14 montre deux ensembles de sources selon la fig.13, pour créer, dans le produit en déplacement, un champ "circulaire", tournant autour de la direction axiale,
- la fig.15 montre les orientations des sources magnétisantes successives dans un ensemble de la fig.13,
- la fig.16 montre schématiquement un ensemble de bobines encerclantes, disposées conformément à l'invention, pour générer des champs axiaux,
- la fig.17 montre une variante de réalisation du dispositif, pour générer dans le produit des champs de direction alternativement normale et tangentielle à sa surface,
- la fig. 18 illustre la répartition des champs générés par le dispositif de la figure 17,
- la fig.19 montre, en vue frontale, l'association de quatre ensembles selon la fig.17, pour générer les champs simultanément sur les quatre faces d'un produit,
- la fig.20 montre une autre variante de réalisation, pour générer des champs tangentiels perpendiculaires à la direction axiale, sur les faces du produit,
- la fig.21 montre partiellement, en perspective, un ensemble de sources du dispositif de la figure 20,
- la fig.22 est une vue en perspective d'un dispositif permettant de générer sur toutes les faces d'un produit des champs tournants tangentiels,
- la fig.23 est une représentation schématique en plan de ce dispositif,
- la fig.24 illustre le principe de la création de champs tangentiels dans le produit par des conducteurs disposés dans un plan parallèle à une face du produit,
- la fig.25 montre, en vue de dessus, les champs générés par les conducteurs de la fig.24,
- la fig.26 montre une disposition particulière de ces conducteurs, enrobant le produit,
- la fig.27 montre un arrangement de conducteurs pour constituer une nappe de conducteurs,
- la fig.28 montre une utilisation de ces nappes comme ensemble de sources magnétisantes,
- la fig.29 montre une variante de disposition des bobines encerclantes pour générer des champs tournants.

Dans la présente invention, on définit par source magnétisante tout moyen permettant de produire un champ magnétique en utilisant au moins un conducteur électrique parcouru par un courant électrique de forme pratiquement continue, tel qu'un conducteur unique, un assemblage en parallèle de plusieurs conducteurs, un conducteur bobiné ou un électroaimant comportant un tel conducteur bobiné sur un noyau.

La particularité de ces sources magnétisantes est que, parcourues par un courant d'intensité fixée, elles produisent un champ magnétique d'intensité, de direction et de sens constants, contrairement à de tels conducteurs parcourus par des courants variables, périodiques.

L'invention est en particulier basée sur la possibilité de générer dans un produit en mouvement relatif, en utilisant de telles sources de champ constant, des champs magnétiques variables, périodiques ou pseudo-périodiques.

Par pseudo-périodique, on entend un champ magnétique variable périodique dont l'amplitude décroît progressivement avec le temps, pour arriver à une valeur nulle après un temps donné. D'une façon analogue, on définit un champ magnétique pseudo-sinusoïdal comme étant un champ magnétique de forme sinusoïdale dont l'amplitude décroît dans le temps pour arriver à une valeur nulle après un temps donné. La pseudo-fréquence et la pseudo-période par analogie correspondent respectivement à la fréquence et à la période du champ magnétique sinusoïdal donnant naissance à un champ magnétique pseudo-sinusoïdal, par décroissance de son amplitude.

Il est aussi signalé que l'obtention de courants électriques purement continus est onéreuse, et que les sources de courant de ce type sont en principe encombrantes lorsque l'intensité demandée est relativement importante. C'est la raison pour laquelle dans la présente invention il est mentionné que le courant utilisé est pratiquement continu en ce sens qu'il peut être produit par des moyens industriels classiques utilisant des alimentations électriques sinusoïdales 50 Hz triphasées provenant du réseau de distribution triphasé et des systèmes de redressement polyphasés qui permettent d'obtenir un courant de forme d'onde présentant un faible taux d'ondulation.

Cette particularité est notamment typique du contrôle magnétoscopique où l'on ne cherche pas à obtenir des champs magnétiques dont la forme d'onde est pure, ceci expliquant pourquoi on peut utiliser un courant électrique approximativement continu qui générera à son tour, par les dispositifs selon la présente invention, un champ magnétique approximativement sinusoïdal par exemple. Approximativement sinusoïdal signifie que la forme d'onde n'est pas parfaitement sinusoïdale, c'est-à-dire que le champ magnétique est périodique et alternatif avec un taux d'harmoniques plus ou moins important.

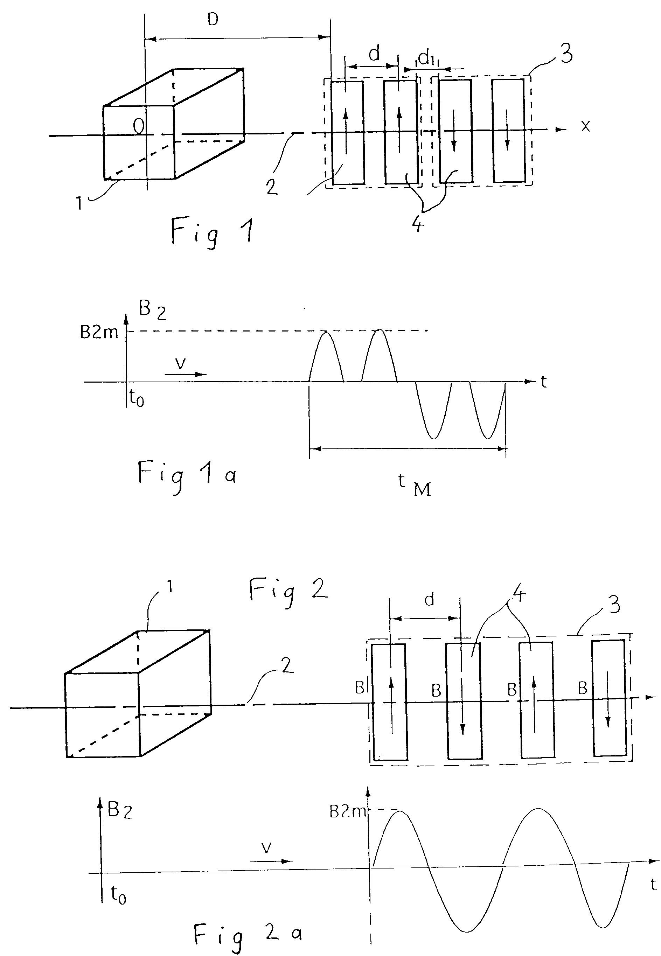

Le principe de la présente invention va d'abord être expliqué en relation avec les figures 1 à 3, où on a représenté, schématiquement, un objet 1 dans lequel on souhaite générer des champs magnétiques variables en le faisant se déplacer relativement selon une direction axiale 2 devant des ensembles 3 de sources magnétisantes 4.

Il est précisé que l'objet 1 peut être de n'importe quelle forme ou dimension, en particulier, par exemple, un produit long sidérurgique de section rectangulaire polygonale, ronde, etc, ou aussi un produit plat allongé (bande) , et qu'il suffit que le dispositif selon l'invention comporte des moyens pour entraîner cet objet ou produit selon la direction axiale 2, tels que, par exemple, une table à rouleaux ou tout autre système permettant de déplacer relativement l'objet ou produit par rapport aux sources magnétisantes, ces moyens de guidage et/ou d'entraînement pouvant d'ailleurs être des éléments d'une installation industrielle sur laquelle le dispositif est adapté pour, par exemple, effectuer une démagnétisation ou un contrôle en ligne lors du défilement de l'objet ou produit.

Les sources magnétisantes 4, représentées schématiquement sur ces figures par des rectangles dans lesquels les flèches indiquent le sens du champ généré, sont réparties de manière à respecter une périodicité quant à leurs caractéristiques propres (direction, sens, norme du vecteur champ magnétique B créé en absence de l'objet 1), et à leur disposition les unes par rapport aux autres.

La direction, le sens et la norme du vecteur champ magnétique B pratiquement constant créé par chacune des sources magnétisantes 4 ainsi que la disposition de celles-ci les unes par rapport aux autres et la vitesse relative v de l'objet 1, sont déterminés de façon que les variations de champ magnétique "vues" par les points de la surface de l'objet 1 durant son déplacement relatif sont telles qu'elles correspondent approximativement au type de champ magnétique périodique ou pseudo-périodique B2 fonction du temps t que l'on cherche à créer à la surface de l'objet 1.

Le nombre de sources magnétisantes (et d'ensembles de ces sources) est déterminé de manière à générer un nombre suffisant de cycles dans le produit, dépendant de l'application du dispositif.

Dans des applications de désaimantation, la durée de cycle total de désaimantation est la durée nécessaire pour décrire plusieurs cycles d'hystérésis de valeur décroissante jusqu'à zéro pour désaimanter totalement le matériau constituant l'objet 1.

Les caractéristiques d'amplitude, de fréquence et de phase initiale du champ magnétique périodique ou pseudo-périodique peuvent donc être déterminées moyennant de régler certains paramètres comme la vitesse relative v de l'objet 1 ou des sources magnétisantes 4 et/ou la distance d entre les différentes sources magnétisantes 4.

Ainsi, dans le cas représenté figure 1, où le champ souhaité dans le produit n'est pas de forme sinusoïdale mais pulsée, la fréquence du champ magnétique pratiquement périodique ou la pseudo-fréquence du champ magnétique pratiquement pseudo-périodique créé à la surface de l'objet 1 est déterminé en réglant la vitesse relative v et l'écartement d entre les différentes sources magnétisantes 4 entre elles ainsi que l'écartement dl entre plusieurs ensembles 3 de même configuration de sources magnétisantes.

Le cas plus courant, où un ensemble de sources 4 est destiné à générer un champ, vu par le produit en déplacement, qui est approximativement sinusoïdal, est représenté figure 2.

Le dispositif selon l'invention permet de générer un tel champ, la principale difficulté restant de disposer de sources magnétisantes 4 capables de générer un champ magnétique pratiquement continu dont la répartition dans l'espace soit telle que la forme du champ, vu par un point du produit lors de son déplacement s'apparente à une forme sinusoïdale.

Selon la présente invention, il est donc possible de générer à la surface d'un objet 1 un champ magnétique sensiblement sinusoïdal en procédant de la façon suivante:

- La vitesse relative v de l'objet 1 étant pratiquement constante, les sources magnétisantes 4 sont régulièrement espacées d'une distance d, de façon qu'en absence d'objet 1, leurs vecteurs champ magnétique, d'intensité maximum Bm, ont la même norme et direction, mais alternativement de sens contraire de telle manière que l'on génère à la surface de l'objet 1 durant son mouvement relatif un champ magnétique approximativement sinusoïdal dont la fréquence est sensiblement égale à v/2d.

L'amplitude du champ magnétique pratiquement périodique ou pseudo-périodique créé à la surface de l'objet 1 est déterminée en réglant l'intensité maximum Bm du champ magnétique B pratiquement continu créé par chacune des sources magnétisantes 4.

La durée t_{M} de la magnétisation ou du cycle total de désaimantation est déterminée par la durée totale durant laquelle l'objet 1 est soumis à l'action du champ magnétique de l'ensemble des sources magnétisantes 4 en réglant la vitesse relative v, le nombre et l'écartement d des sources magnétisantes entre elles, ainsi que par l'écartement d des sources magnétisantes entre elles, ainsi que par l'écartement d1 et le nombre d'ensembles 3 de sources magnétisantes.

La phase initiale du champ magnétique pratiquement périodique ou pseudo-périodique créé à la surface de l'objet 1, est déterminée en réglant la vitesse relative v, en précisant une valeur de référence tₒ de temps t servant d'origine, et en réglant la distance entre la position de l'objet 1 à cet instant de référence tₒ par rapport à l'ensemble 3 des sources magnétisantes 4.

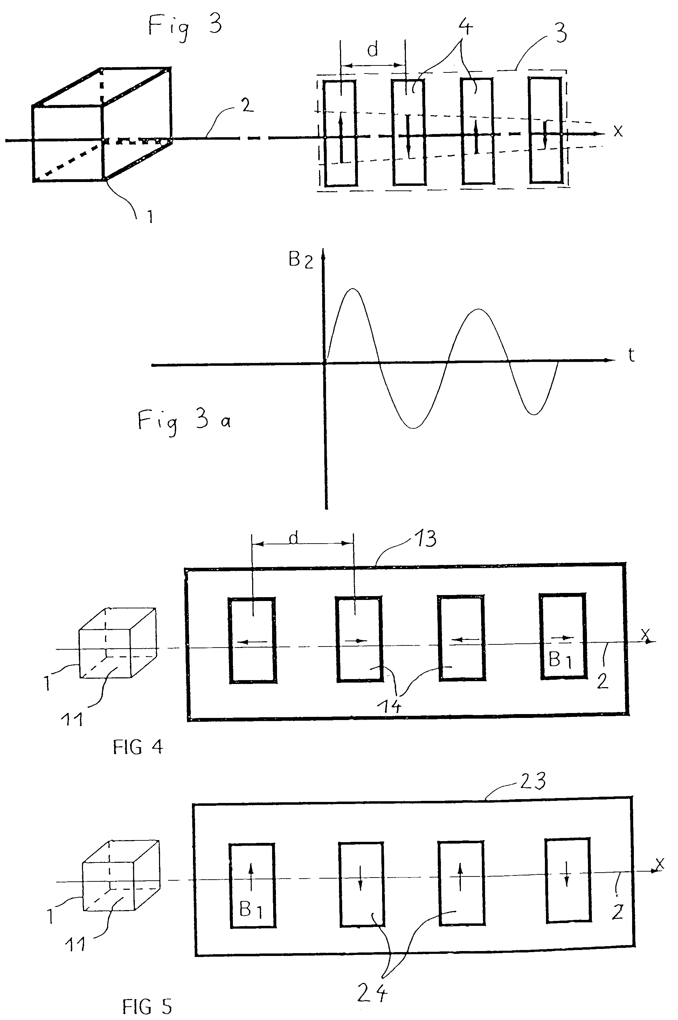

Une désaimantation de l'objet 1 ferromagnétique sera réalisée en diminuant progressivement l'amplitude du champ magnétique sensiblement sinusoïdal (la figure 3 représente un schéma expliquant le principe utilisé). Cette décroissance d'amplitude est réalisée par exemple en diminuant le nombre de spires (dans le cas d'utilisation d' électroaimants ou bobines), et/ou l'intensité du courant pratiquement continu alimentant les sources magnétisantes 4, et/ou encore en écartant progressivement celles-ci de la trajectoire relative de l'objet 1 de façon à augmenter progressivement l'entrefer entre les différentes sources magnétisantes 4 et la surface de l'objet 1.

Le dispositif selon l'invention vise également à créer, sur certaines faces 11 d'un objet 1, un champ magnétique tangentiel tournant, pratiquement périodique et d'amplitude sensiblement constante.

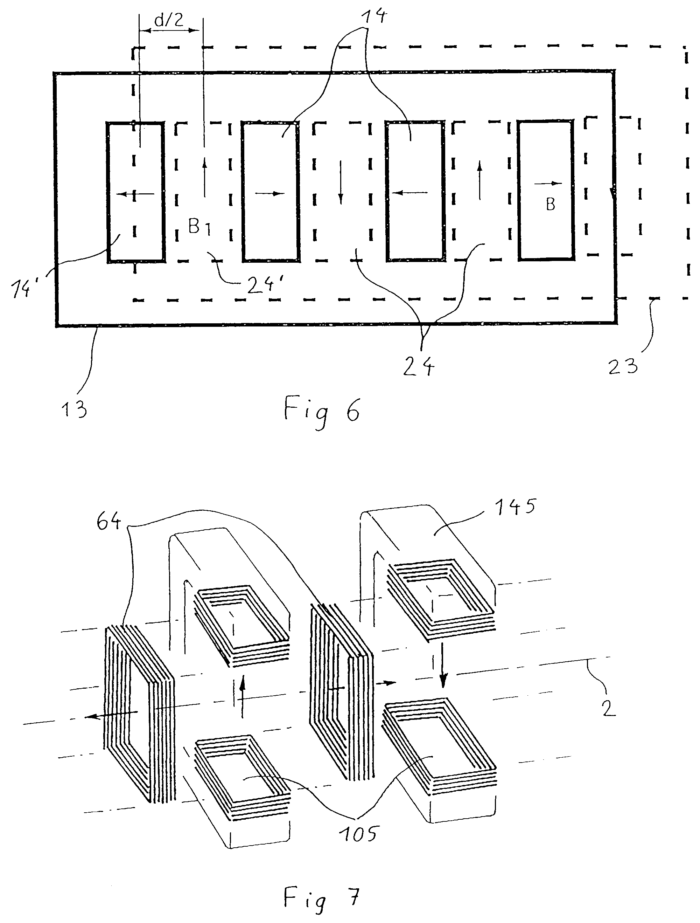

Pour ce faire, le dispositif comporte deux ensembles 13, 23 de sources magnétisantes 14, 24. Le premier ensemble 13 est représenté schématiquement figure 4 et comporte des sources magnétisantes 14 générant des champs orientés selon la direction axiale 2. Le deuxième ensemble 23 est représenté figure 5 et comporte des sources magnétisantes 24 générant des champs, orientées perpendiculairement à la direction axiale 2, sur les faces 11 (faces verticales sur les figures) de l'objet 1.

Un dispositif permettant de générer un champ tangentiel tournant sur ces faces 11 est représenté schématiquement figure 6 et comporte deux ensembles 13, 23 imbriqués l'un dans l'autre. Ce dispositif crée sur les faces 11 de l'objet 1, se déplaçant à vitesse relative pratiquement constante v, des champs magnétiques tangentiels approximativement sinusoïdaux, pratiquement de même fréquence et de même amplitude, dont les directions sont perpendiculaires entre elles. Ces ensembles sont disposés de manière que l'ensemble 23 des sources magnétisantes 24 soit imbriqué dans le premier ensemble 13 des sources magnétisantes 14, de façon que la première source magnétisante 24 de l'ensemble 23 soit décalée d'une distance égale à d/2 par rapport à la première source magnétisante 14 de l'ensemble 13.

Le champ magnétique tournant résultant, vu par l'objet 1, est pratiquement périodique, de même amplitude et fréquence v/2d que les champs magnétiques approximativement sinusoïdaux générés respectivement par chaque ensemble 13 et 23 de sources magnétisantes.

Il est également possible d'opérer à une désaimantation en diminuant progressivement et dans les mêmes proportions l'intensité du champ magnétique créé par chacune des sources magnétisantes 14, 24 des deux ensembles 13 et 23, par groupe de deux sources (une d'un ensemble, l'autre de l'autre ensemble).

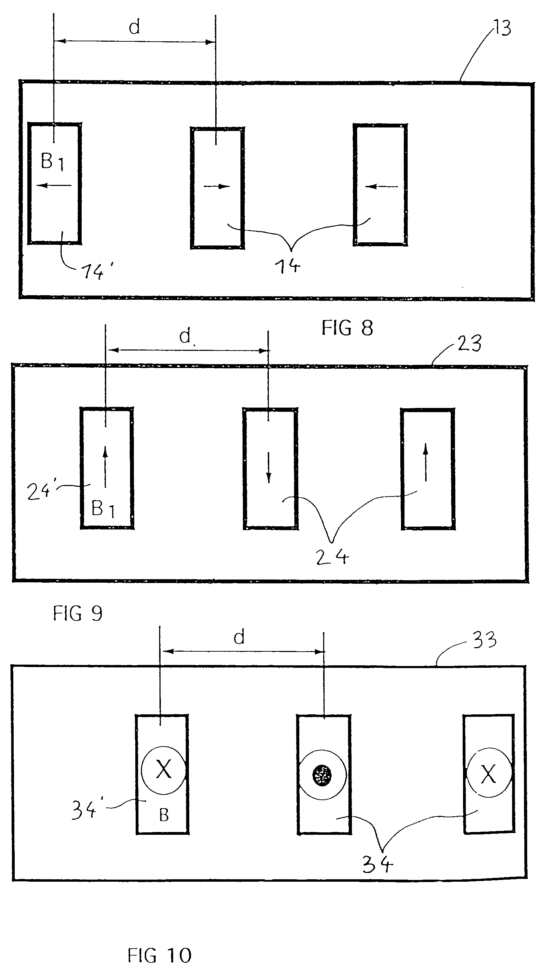

D'une façon plus globale, il est possible, grâce au dispositif selon l'invention, de magnétiser quasiment toutes les faces d'un objet 1 à l'aide de champs magnétiques tangentiels tournants sensiblement périodiques et pratiquement sinusoïdaux ainsi qu'on le comprendra d'après les figures 8 à 11.

Les ensembles 13 et 23 représentés aux figures 8 et 9 sont similaires aux ensembles des figures 4 et 5. L'ensemble 33 de la figure 10 est similaire à l'ensemble 23, mais il est disposé de manière à générer un champ orthogonal aux champs créés par les ensembles 13 et 23 (perpendiculaire au plan de la feuille).

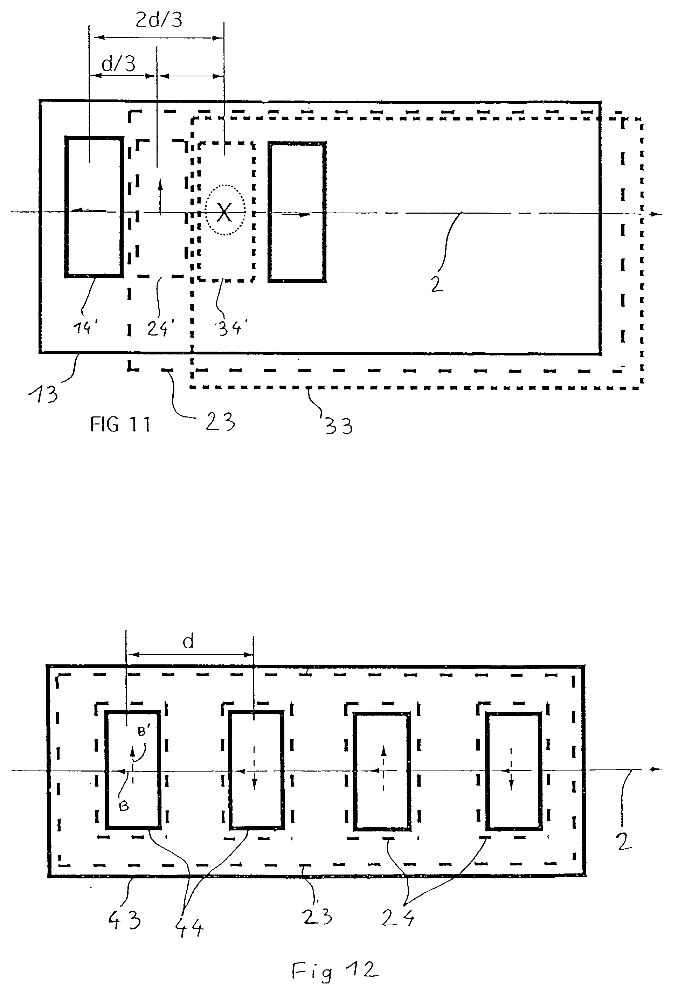

Comme on le voit sur la figure 11, le second ensemble 23 de sources magnétisantes 24 est imbriqué dans le premier ensemble 13 de façon que la première source magnétisante 24' de l'ensemble 23 soit décalée d'une distance égale à d/3 par rapport à la première source magnétisante 14' de l'ensemble 13.

Le troisième ensemble 33 de sources magnétisantes 34 est imbriqué dans les deux ensembles 13 et 23 de sources magnétisantes de façon que la première source magnétisante 34' de l'ensemble 33 soit décalé d'une distance égale à 2d/3 par rapport à la première source magnétisante 14' de l'ensemble 13.

Le champ magnétique tangentiel tournant résultant sur chacune des faces de l'objet 1, moyennant d'avoir choisi correctement le sens du champ magnétique continu créé par chacune des sources magnétisantes 24 et 34 façon à produire un déphasage de 2π/3 entre les différents champs magnétiques approximativement sinusoïdaux générés par les ensembles 13, 23 et 33, est pratiquement périodique et de fréquence sensiblement égale à v/2d.

L'avantage essentiel de ce procédé en contrôle magnétoscopique est de pouvoir magnétiser toutes les faces d'un objet 1 pendant une même période de temps avec la possibilité de déceler les défauts dans toutes les directions. Il est clair que dans ce qui précède, seule a été considérée la répartition des champs magnétiques tangentiels à la surface de l'objet 1, en sachant bien que physiquement il existe des champs magnétiques dont la direction est normale aux faces de l'objet 1, dus au fait que les lignes de champs magnétiques pénètrent dans une matière ferromagnétique perpendiculairement à sa surface. Bien que ce champ magnétique parasite gêne pour le contrôle magnétoscopique, il n'en reste pas moins vrai que son effet est amoindri par l'effet de la somme vectorielle de deux champs magnétiques tangentiels qui, par définition, crée un champ magnétique tournant.

Toujours selon les mêmes principes, une désaimantation utilisant cette configuration est utilisable. Dans ce cas, la décroissance progressive de l'amplitude des champs magnétiques tournants est obtenue en diminuant progressivement et dans les mêmes proportions l'intensité du champ magnétique créé par chacune des sources magnétisantes des trois ensembles, et ceci par groupes de trois sources magnétisantes appartenant respectivement à chacun des trois ensembles 13, 23, 33.

Le dessin de la figure 12 illustre quant à lui le principe de création d'un champ magnétique oscillant résultant de la somme d'un champ magnétique B de sens constant selon la direction axiale 2, et d'un champ magnétique B', de sens alterné pour deux sources magnétisantes successives, et de direction perpendiculaire au champ B.

Le champ B peut être généré par un ensemble 43 de sources magnétisantes 44, telles que les sources 14 de la figure 4, à la différence de ces dernières que ces sources 44 sont réalisées, ou alimentées en courant, de manière que les champs B générés par chacune de ces sources soient le même sens.

Les champs B' sont générés par un ensemble 23 de sources magnétisantes 24, tel que montré figure 5.

Ces deux ensembles 23, 43 sont imbriqués de manière que leur combinaison génère dans l'objet ou produit 1 un champ magnétique oscillant de fréquence sensiblement égale à v/2d.

Une autre possibilité du dispositif selon l'invention, notamment intéressante pour le contrôle magnétoscopique, est de pouvoir générer dans l'objet 1 en déplacement un champ magnétique "circulaire", c'est-à-dire dont le vecteur champ tourne autour de la direction axiale 2, dans un plan perpendiculaire à cette direction, en restant sensiblement tangentiel aux faces 11, 21 du produit.

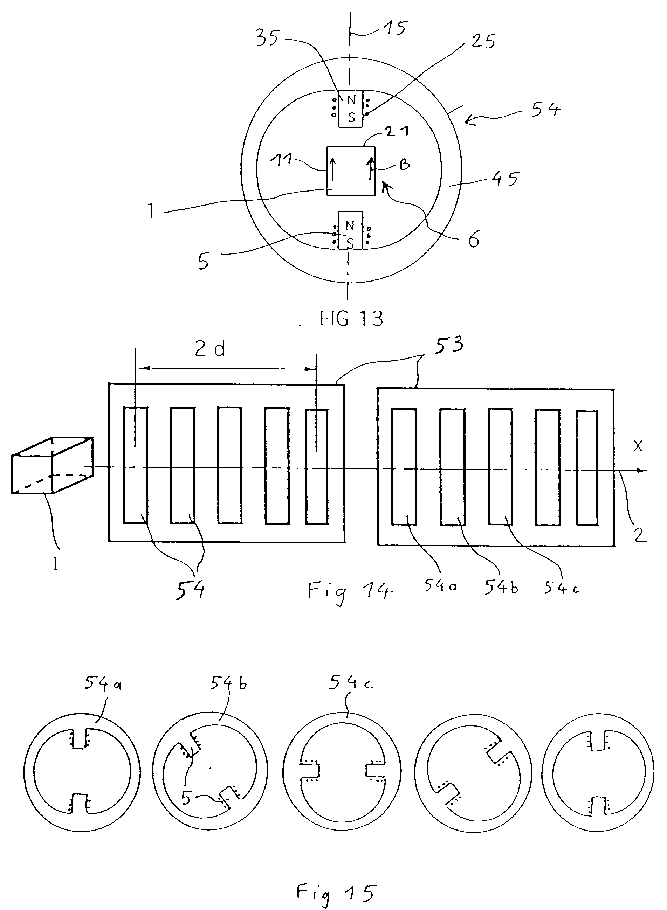

Un mode de réalisation du dispositif permettant de générer de tels champs, est représenté schématiquement aux figures 13 à 15. La figure 14 montre ce dispositif comportant par exemple deux ensembles 53, pratiquement identiques, de sources magnétisantes 54.

Chaque source 54 (figure 13) comporte deux électroaimants 5 ayant un axe commun 15 sensiblement perpendiculaire à la direction axiale 2, disposés symétriquement de part et d'autre de la zone de passage 6 de l'objet 1, chaque électroaimant est formé d'un bobinage 25 et d'un noyau 35, de telle manière que les pôles situés en vis-à-vis soient de polarités opposées, et les noyaux des électroaimants d'une même source sont reliés par une culasse magnétique extérieure 45, et les axes des électroaimants de deux sources successives sont décalés angulairement autour de la direction axiale 2 (figure 15).

Il est important de noter que les champs générés dans l'objet 1, considérés dans la présente application sont les champs sensiblement tangentiels générés sur les surfaces orientées dans la direction de l'axe 15 (surfaces 11 sur la figure 13) et non les champs au voisinage des surfaces 21, perpendiculaires à l'axe 15, qui sont normaux à ces surfaces et ne participent donc pas à la création du champ circulaire recherché.

On comprendra aisément qu'en décalant angulairement les sources 54, les vecteurs B du champ tangentiel généré dans l'objet 1 vont tourner autour de la direction axiale 2, formant ainsi, lors du déplacement de l'objet 1, le champ circulaire souhaité.

Préférentiellement, chaque ensemble 53 est constitué d'un minimum de cinq sources 54. La vitesse relative v de l'objet 1 étant pratiquement constante, ces ensembles 53 génèrent alors un champ magnétique circulaire de fréquence sensiblement égale à v/2d lorsque l'objet 1 passe par l'intérieur des culasses 45, dans la zone de passage 6; 2d représentant la distance entre la première et la dernière source 54 de chaque ensemble.

Comme on le comprendra aisément, au lieu de les placer autour des noyaux 35, les bobinages 25 pourraient être placés autour de la culasse 45.

Comme pour les dispositifs précédents, ce dispositif permet de désaimanter des objets 1 en mouvement relatif ; il suffit de faire décroître progressivement l'amplitude du champ magnétique circulaire obtenue en diminuant progressivement d'une même valeur, ensemble par ensemble, l'intensité du champ magnétique continu créé par chacun des éléments 54. Cette décroissance s'opérant entre le premier et le dernier ensemble 53 rencontré par l'objet durant son déplacement relatif jusqu'à l'obtention d'une valeur de champ magnétique pratiquement nulle à la sortie du dernier ensemble (le nombre d'ensembles 53 pouvant évidemment être supérieur à deux).

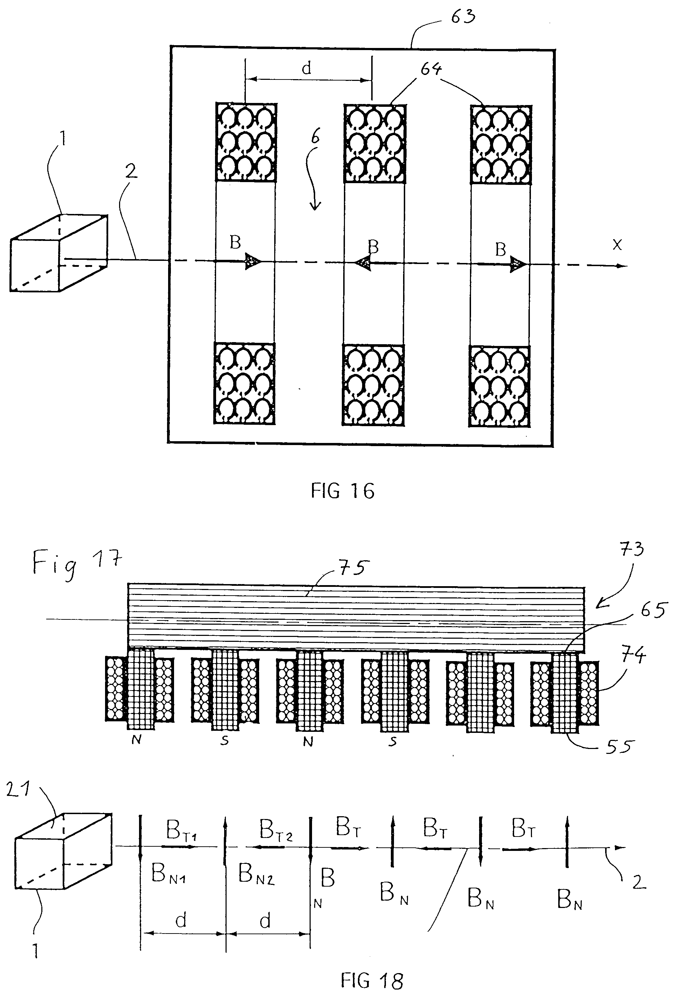

Une variante du dispositif de magnétisation ou de désaimantation permettant de créer un champ magnétique parallèle à la direction axiale 2 de déplacement d'un objet 1 est illustré par la figure 16.

Ce dispositif est constitué d'un ensemble 63 de sources magnétisantes qui sont ici.des bobinages 64 encerclant la zone de passage 6, préférentiellement montés électriquement en série et alimentés par un courant continu de sens tel que le champ généré par chaque bobinage corresponde au sens souhaité, c'est-à-dire, comme représenté par les flèches B, de manière que deux bobinages successifs génèrent des champs de sens opposés, de manière à créer à la surface de l'objet en déplacement des champs tangentiels sensiblement sinusoïdaux, orientés parallèlement à la direction axiale 2.

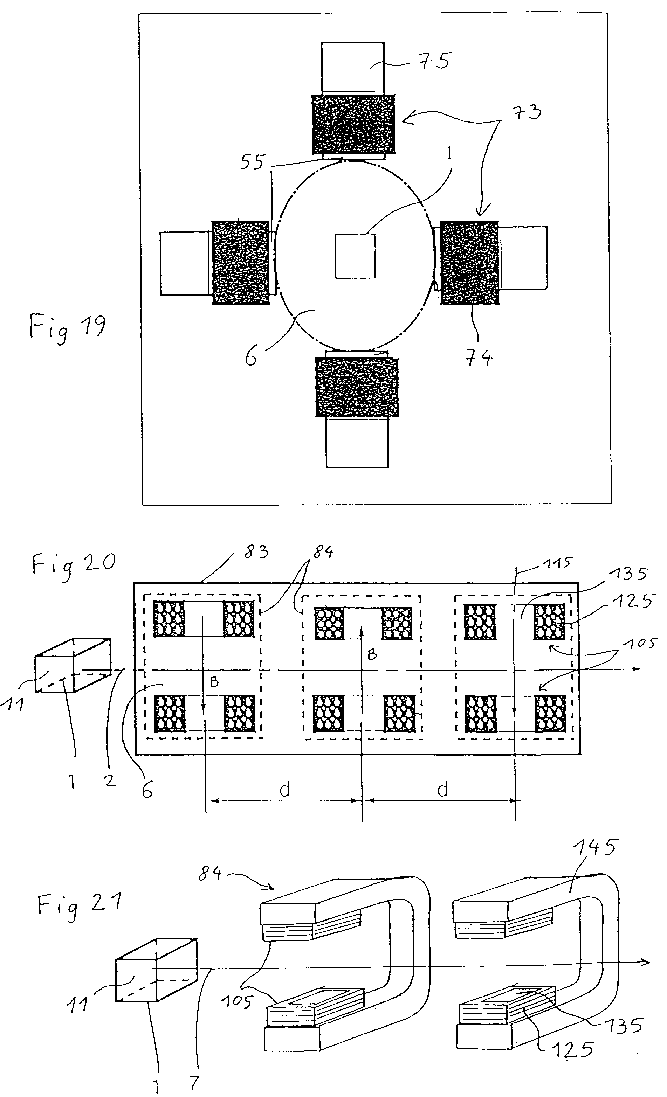

Une autre variante du dispositif, permettant de créer un champ magnétique périodique ou pseudo-périodique dont la direction est successivement normale et tangentielle à une face de l'objet 1, est représentée par les figures 17 et 18 ainsi qu'une extension de ce dispositif consistant à magnétiser simultanément plusieurs faces de l'objet 1, comme le représente la figure 19.

Le premier dispositif (illustré par la figure 17) est constitué d'un ensemble 73 de sources magnétisantes qui sont des électroaimants 74 ayant des noyaux d'axe sensiblement perpendiculaire à la dite direction axiale, agencés de manière que deux électroaimants successifs génèrent, dans la direction perpendiculaire à la direction axiale, des champs de sens opposés, une extrémité 55 de chaque noyau étant dirigée vers la zone de passage et l'autre extrémité 65 étant disposée contre une culasse magnétique commune 75, s'étendant parallèlement à la direction axiale 2.

Les bobines des électroaimants 74 sont montées électriquement de préférence en série et alimentées par un courant électrique pratiquement continu de façon que leur polarité corresponde au sens du champ magnétique souhaité.

Comme on le voit sur la figure 18, qui représente les champs générés dans l'objet 1 lors de son déplacement, la surface 21 de celui-ci, dirigée vers le dispositif 73, verra successivement un champ normal B_{N1} dirigé vers l'intérieur de l'objet, puis un champ tangentiel B_{T1} résultant du passage du flux entre le pôle N du premier électroaimant et le pôle S du deuxième électroaimant, puis un champ normal B_{N2}, de sens opposé à B_{N1}, puis à nouveau un champ tangentiel B_{T2} de sens opposé à B_{T1}, et ainsi de suite.

Le dispositif représenté en vue frontale sur la figure 19 comporte quatre ensembles tels que 73, répartis circonférentiellement autour de la zone de passage 6, pour créer les champs variables décrits ci-dessus, simultanément sur les quatre faces de l'objet 1.

Dans les variantes des figures 17 et 19, les électroaimants 74 sont préférentiellement réglables en position le long de la culasse 75, ce qui peut être facilement réalisé par l'homme du métier par des moyens de réglage, selon la direction axiale, de l'écartement des sources magnétisantes constituées par les électroaimants, permettant de garder le même espacement entre toutes les sources, les noyaux des électroaimants glissant sur la surface de la culasse 75.

On notera que de tels moyens de réglage de l'écartement peuvent être aussi utilisés sur les autres variantes de dispositifs, ce qui donne une grande souplesse d'utilisation pour ceux-ci, en permettant de régler la fréquence des champs générés dans le produit ou objet, même lorsque la vitesse de déplacement est imposée.

Bien entendu, lorsque cela est possible, ce peut être la vitesse d'entraînement des moyens de déplacement de l'objet ou du produit qui est réglable, pour ajuster la fréquence des champs générés dans le dit objet ou produit.

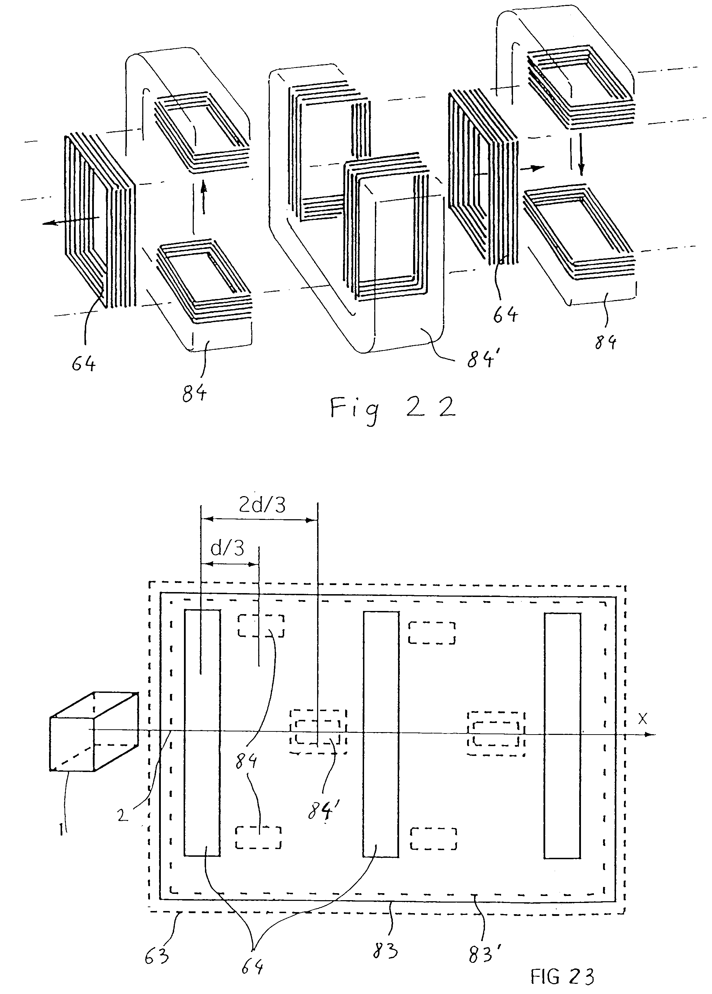

Selon une autre variante encore, représentée aux figures 20 et 21, le dispositif comprend un ensemble 83 de sources magnétisantes et chaque source 84 comporte deux électroaimants 105 ayant un axe commun 115 sensiblement perpendiculaire à la direction axiale 2, disposés symétriquement de part et d'autre de la dite zone de passage 6. Chaque électroaimant est formé d'un bobinage 125 et d'un noyau 135, et les noyaux des électroaimants d'une même source sont reliés par une culasse magnétique extérieure 145. Les électroaimants 105 de deux sources successives sont agencés de manière à générer dans la zone de passage des champs de directions parallèles et de sens opposés.

Ce dispositif permet de créer sur les faces 11 de l'objet 1, dirigées sensiblement dans la direction des axes 115, un champ magnétique périodique ou pseudo-périodique tangentiel, orthogonal à la direction axiale 2, dans la mesure où les électroaimants sont suffisamment larges dans la direction transversale à la dite direction axiale (c'est-à-dire perpendiculairement au plan de la feuille, dans la figure 20), pour que la plus grande partie possible du flux émis par les sources 84 passe à proximité des dites faces 11 de l'objet 1, parallèlement à celles-ci.

On notera que, au lieu de réaliser la culasse 145 en forme de fer à cheval, elle pourrait également être réalisée sous forme circulaire, comme dans la variante représentée figure 13.

Selon d'autres variantes de réalisation, combinant plusieurs des ensembles de sources magnétisantes précédemment décrites, il est possible de créer sur certaines ou sur toutes les faces latérales d'un objet 1 des champs tournants tangentiels périodiques et sensiblement sinusoïdaux.

Pour cela, le dispositif comporte plusieurs ensembles de sources magnétisantes, chaque ensemble étant réalisé selon l'une des configurations décrites précédemment, et différente de celle d'un autre ensemble, ces différents ensembles étant imbriqués les uns dans les autres.

Par exemple, comme représenté figure 7, le dispositif peut comporter un ensemble 63 de bobines encerclantes 64, tel que celui représenté à la figure 16, imbriqué avec un ensemble 83 d'électroaimants 105 montés sur une culasse magnétique, tel que celui représenté aux figures 20 et 21.

Ce dispositif permet par exemple de générer sur deux faces opposées d'un produit ou objet de section rectangulaire ou carrée, des champs tangentiels tournants, par combinaison des champs dirigés axialement générés par des bobines 64 avec les champs tangents dirigés transversalement générés sur les faces du produit par les ensembles d'électroaimants 105, selon le principe exposé en relation avec la figure 6.

En imbriquant en plus un troisième ensemble 83' d'électroaimants, du type de l'ensemble des figures 20 et 21, mais orienté à 90° par rapport à l'ensemble 83, comme représenté sur les figures 22 et 23, on obtient un dispositif capable de générer pratiquement sur toutes les faces de l'objet des champs magnétiques tournants tangentiels.

Le nombre de bobines et électroaimants représentés sur ces figures a été volontairement limité pour ne pas les surcharger inutilement, mais on comprendra aisément que dans la pratique, ce nombre peut être considérablement plus élevé, suffisant pour générer dans le produit le nombre de cycles requis pour obtenir la magnétisation ou démagnétisation souhaitée. De même, il est possible de disposer plusieurs ensembles de sources magnétisantes successivement selon la direction axiale.

Par ailleurs, il est également possible de générer, par les bobines ou électroaimants successifs d'un même ensemble, des champs de même sens, dans le cas où on souhaite obtenir dans le produit un champ variable ayant une forme pulsée (et donc non alternée régulièrement), ou même toute combinaison désirée de formes d'ondes pulsée et alternée.

Egalement, les sources magnétisantes représentées par exemple aux figures 7 et 22 pourraient, au lieu d'être constituées d'électroaimants montés sur une culasse magnétique, être formées de bobines sans noyau disposées de manière à générer dans le produit ou l'objet un champ de forme similaire à celui généré par les dits électroaimants. Dans ce cas, les bobines seront préférentiellement conformées de manière à entourer le mieux possible la zone de passage, pour limiter les pertes de champ vers l'extérieur.

Enfin, bien que l'objet ou produit 1 représenté ait été représenté pour faciliter les explications, comme ayant une section quadrilatère, des champs similaires pourraient être générés dans des produits de toute autre section, même irrégulière, le nombre d'ensembles générant des champs orthogonaux à la direction axiale et répartis angulairement, pouvant être augmenté et/ou réparti de manière non régulière.

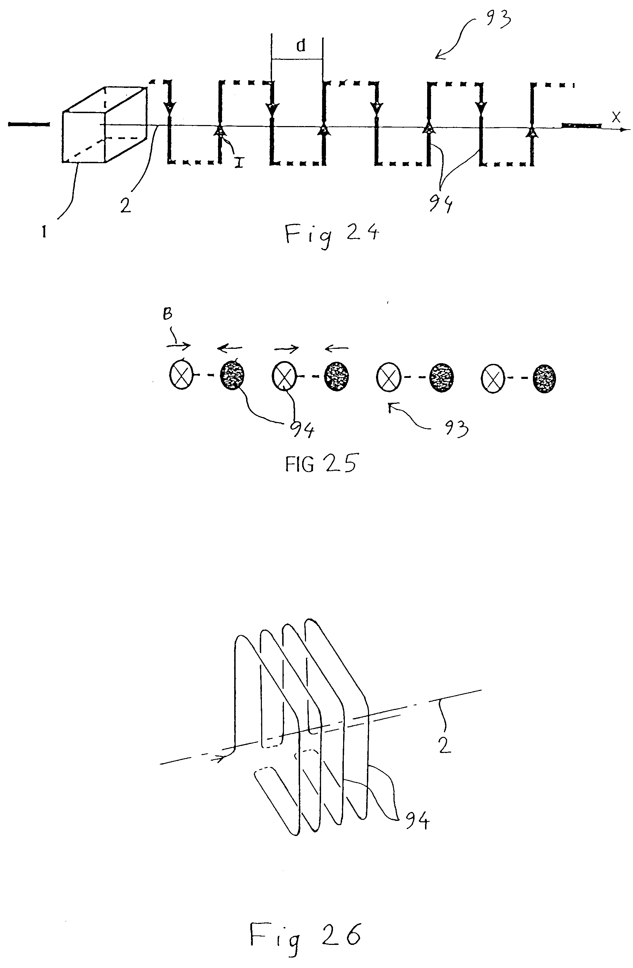

Selon d'autres variantes encore, schématisées dans les figures 24 à 28, les champs magnétiques peuvent être générés par des éléments de conducteurs parcourus par des courants sensiblement continus de forte intensité. Comme on le sait, un courant électrique passant dans un conducteur génère autour de celui-ci un champ magnétique circonférentiel. En disposant un tel conducteur à proximité d'un objet, on peut donc générer dans ce dernier un champ dirigé orthogonalement à la direction dans lequel s'étend le dit conducteur.

Sur le dessin de la figure 24, on a représenté schématiquement un ensemble 93 d'éléments conducteurs rectilignes permettant de générer sur une face de l'objet 1 un champ magnétique périodique ou pseudo-périodique tangentiel à la surface, lors du déplacement de l'objet selon la direction axiale 2.

Dans cet ensemble, chaque source magnétisante est constituée d'un conducteur électrique 94 s'étendant à la périphérie de la zone de passage, tous les conducteurs d'un même ensemble ayant une orientation commune selon une direction transversale à la dite direction axiale 2, et deux conducteurs successifs étant parcourus par des courants I de sens contraire.

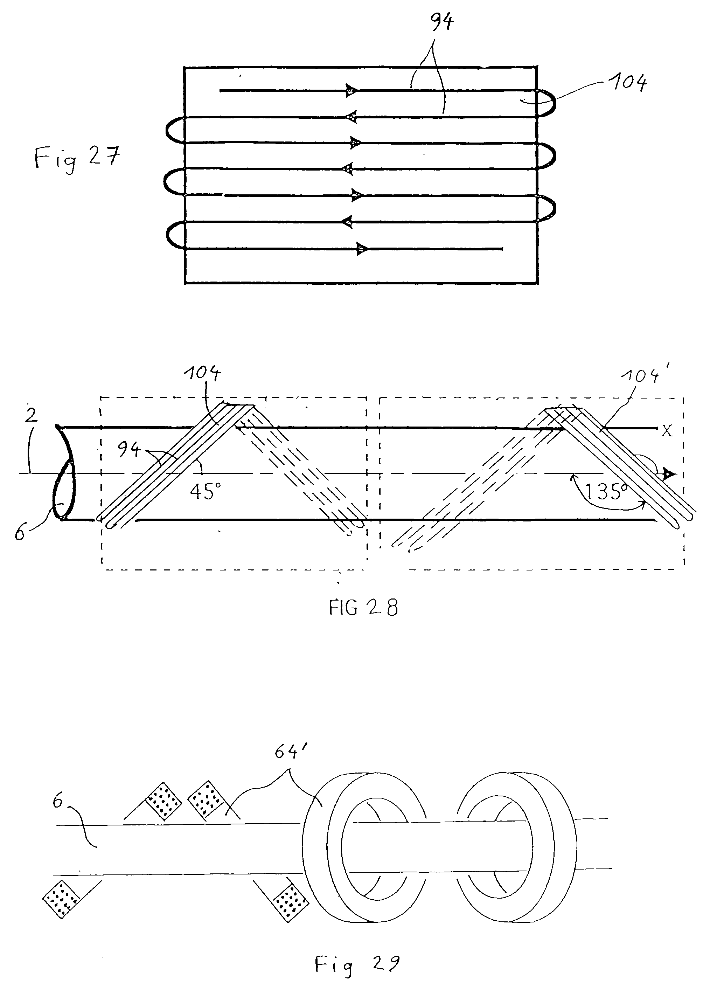

Comme on le voit à la figure 25, un tel ensemble de conducteurs permet de créer sur la face de l'objet défilant devant lui des champs B dirigés selon la direction axiale 2, alternativement dans un sens et dans l'autre. Préférentiellement, tous les éléments conducteurs 94 d'un même ensemble 93 sont reliés en série, comme représenté, en pointillés, sur la figure 24 et parcourus par le même courant I.

Cet ensemble 93 de conducteurs 94 disposés parallèlement dans un plan ne permet pratiquement de générer des champs que sur une face de l'objet. On comprendra aisément que moyennant de conformer chaque élément conducteur de manière à ce qu'il entoure la zone de passage 6 de l'objet, comme représenté figure 26, il est possible de générer ces champs sur toutes les faces latérales de l'objet.

Un tel ensemble d'éléments conducteurs 94 peut être réalisé simplement par un conducteur unique de grande longueur replié plusieurs fois sur lui-même en épingles à cheveux successives, tel que représenté figure 27.

On forme ainsi une nappe 104 d'éléments conducteurs de même forme, parallèles entre eux, équidistants, et parcourus par un même courant I pratiquement continu, mais dont le sens est inversé entre deux éléments conducteurs adjacents.

Une telle nappe peut ensuite être placée autour de la zone de passage de l'objet et conformée de manière à épouser au mieux la forme de la section du dit objet. Lorsque la nappe est ainsi placée, avec chaque élément conducteur contenu sensiblement dans un plan perpendiculaire à la direction axiale 2 (comme sur la figure 26), la direction du champ périodique généré à la surface de l'objet est sensiblement parallèle à la dite direction axiale.

Selon une disposition particulière, représentée figure 28, cette nappe 104 peut être enroulée hélicoïdalement autour de la zone de passage 6, par exemple avec les éléments conducteurs orientés à 45°. Une deuxième nappe 104' est alors préférentiellement placée à la suite de la première, dans la direction axiale, mais avec un pas d'hélice de sens contraire à la première.

Ainsi, le dispositif permet de créer successivement deux champs magnétiques approximativement sinusoïdaux dont les directions sont perpendiculaires entre elles. Une telle disposition est particulièrement adaptée au contrôle par magnétoscopie de produits longs sidérurgiques, tels que billettes, ronds, barres, tubes,...

Enfin, dans une dernière variante représentée figure 29, des champs de direction inclinée par rapport à la direction axiale peuvent également être générés par des bobines encerclantes 64', similaires aux bobines de la figure 16, mais disposées de manière que leur axes soient inclinés par rapport à la dite direction axiale. On disposera alors préférentiellement ces bobines par deux groupes de deux bobines, les deux bobines d'un groupe ayant leurs axes coplanaires et sensiblement perpendiculaires, et les plans des axes des deux groupes étant décalés de 90° autour de la direction axiale.

Un avantage commun à toutes ces variantes est de pouvoir générer dans un produit en déplacement des champs variables, tout en n'utilisant que des bobinages, conducteurs ou électroaimants alimentés en courant continu. Compte tenu des exigences actuelles en matière de "rejet" d'harmoniques sur le réseau d'alimentation d'électricité, de la nécessité d'équilibrer la consommation sur les trois phases d'une alimentation électrique triphasée, ou encore de réduire la puissance réactive consommée par des éléments particulièrement inductifs tels que des bobines directement alimentées sur le secteur de distribution d'électricité ou par l'intermédiaire d'un transformateur électrique, le fait d'obtenir un courant pratiquement continu en utilisant des systèmes de redressement polyphasés pour alimenter les sources magnétisantes est appréciable.

Il convient toutefois, dans la mesure du possible, de relier les conducteurs des différentes sources magnétisantes en série, (ceci limite l'intensité du courant débité) en prenant garde à la polarité des bobines qui doit être compatible avec le sens du champ magnétique que l'on souhaite obtenir. Dans ce cas, l'intensité du courant électrique alimentant les différentes sources magnétisantes peut être ajustée en réglant le nombre de spires, et notamment pour une utilisation en démagnétisation, en réalisant les bobinages avec un nombre de spires décroissant dans le sens de défilement du produit.

Une autre possibilité pour réduire progressivement l'intensité du champ généré dans l'objet lors de son déplacement, en utilisant des sources magnétisantes identiques, est d'écarter progressivement ces sources de la zone de passage de l'objet.

Enfin, bien que couramment le déplacement relatif de l'objet ou produit soit provoqué par des moyens d'entraînement motorisés (rouleaux, bandes transporteuses ou similaires), il convient d'indiquer que les moyens de déplacement peuvent être réalisés simplement par un support incliné sur lequel l'objet se déplace en glissant sous l'effet de son propre poids.

## Revendications

1. Dispositif de magnétisation ou démagnétisation d'un produit métallique (1) en déplacement relatif par rapport au dispositif selon une direction axiale (2), caractérisé en ce qu'il comporte :
- au moins un ensemble (3) de sources magnétisantes (4) réparties selon la dite direction axiale au voisinage d'une zone de passage (6) du produit, chaque source magnétisante (4) comprenant au moins un conducteur électrique alimenté par un courant continu ou sensiblement continu, et agencé de manière à générer dans la dite zone de passage un champ magnétique (B) d'intensité et de sens constant prédéterminés, deux sources magnétisantes successives d'un même ensemble étant agencées de manière que les champs respectifs générés par les dites sources magnétisantes soient d'orientation, de sens et/ou d'intensité différentes, et
- des moyens de déplacement pour déplacer en continu le dit produit par rapport aux sources magnétisantes selon la dite direction axiale,
le nombre de ces sources magnétisantes, et leur répartition selon la direction axiale, étant tel que lors du défilement du produit, un point quelconque de la surface du produit est soumis à un champ de direction, d'intensité et/ou de sens variable.

2. Dispositif selon la revendication 1, caractérisé en ce que la vitesse d'entraînement des dits moyens de déplacement est réglable.

3. Dispositif selon la revendication 1, caractérisé en ce qu'il comporte des moyens de réglage de l'écartement des dites sources magnétisantes selon la dite direction axiale.

4. Dispositif selon la revendication 1, caractérisé en ce que les dites sources magnétisantes sont des bobinages (64) encerclant la dite zone de passage (6), disposés de manière que deux bobinages successifs génèrent des champs de sens opposés.

5. Dispositif selon la revendication 4, caractérisé en ce que les axes des dits bobinages (64') sont inclinés par rapport à la dite direction axiale (2).

6. Dispositif selon la revendication 1, caractérisé en ce que les dites sources sont des électroaimants (74) ayant des noyaux d'axe sensiblement perpendiculaire à la dite direction axiale (2), agencés de manière que deux électroaimants successifs génèrent dans la direction perpendiculaire à la direction axiale des champs de sens opposés, une extrémité (55) de chaque noyau étant dirigée vers la zone de passage (6) et l'autre extrémité (65) étant disposée contre une culasse magnétique commune (75), s'étendant parallèlement à la direction axiale.

7. Dispositif selon la revendication 6, caractérisé en ce que les électroaimants (74) sont réglables en position le long de la dite culasse.

8. Dispositif selon la revendication 1, caractérisé en ce que chacune des dites sources (54) comporte deux électroaimants (5) ayant un axe commun (15) sensiblement perpendiculaire à la direction axiale (2), disposés symétriquement de part et d'autre de la dite zone de passage, chaque électroaimant est formé d'un bobinage (25) et d'un noyau (35), et les noyaux des électroaimants d'une même source sont reliés par une culasse magnétique (45) extérieure, et en ce que les axes des électroaimants de deux sources successives sont décalés angulairement autour de la direction axiale.

9. Dispositif selon la revendication 1, caractérisé en ce que chacune des dites sources (84) comporte deux électroaimants (105) ayant un axe commun (115) sensiblement perpendiculaire à la direction axiale (2), disposés symétriquement de part et d'autre de la dite zone de passage (6), chaque électroaimant (105) est formé d'un bobinage (125) et d'un noyau (135), et les noyaux des électroaimants d'une même source sont reliés par une culasse magnétique (145) extérieure, et en ce que les électroaimants de deux sources successives sont agencés de manière à générer dans la zone de passage des champs de directions parallèles et de sens opposés.

10. Dispositif selon la revendication 1, caractérisé en ce qu'il comporte plusieurs ensembles (3) de sources magnétisantes (4) , chaque ensemble étant réalisé selon l'une quelconque des configurations définies dans les revendications 4 à 9, différente de celle des autres ensembles, ces différents ensembles étant imbriqués les uns dans les autres.

11. Dispositif selon la revendication 1, caractérisé en ce qu'il comporte plusieurs ensembles (3, 73) identiques selon l'une quelconque des configurations définies dans les revendications 6 à 9, répartis angulairement autour de la dite zone de passage.

12. Dispositif selon la revendication 1, caractérisé en ce que chaque source magnétisante est constituée d'un conducteur électrique (94) s'étendant à la périphérie de la zone de passage (6), tous les conducteurs (94) d'un même ensemble ayant une orientation commune selon une direction transversale à la dite direction axiale (2), et deux conducteurs successifs étant parcourus par des courants (I) de sens contraire.

13. Dispositif selon la revendication 12, caractérisé en ce que les dits conducteurs sont disposés en nappe (104, 104') de conducteurs (94) parallèles dans laquelle deux conducteurs adjacents sont parcourus par des courants (I) de sens contraire, la dite nappe étant montée hélicoïdalement autour de la dite zone de passage (6).

14. Dispositif selon l'une quelconque des revendications précédentes, caractérisé en ce que les conducteurs (94) ou bobinages (25, 64, 74, 125) des différentes sources magnétisantes d'un même ensemble sont reliés en série.

15. Dispositif selon l'une quelconque des revendication 4 à 9, caractérisé en ce que les bobinages (25, 64, 74, 125) des différentes sources magnétisantes sont reliés en série et le nombre de spires des bobinages des sources magnétisantes décroît dans le sens de défilement du produit.
